# EUROPÄISCHE PATENTANMELDUNG

(11) **EP 0 972 481 A1**
(43) Veröffentlichungstag der Anmeldung: **19.01.2000**
(21) Anmeldenummer: 99810584.5
(22) Anmeldetag: 05.07.1999
(51) Int. Cl.: A47J 31/40

(54) **Dispensergerät sowie dazugehörige Behältnisse**

(30) Priorität: 07.07.1998 CH 144198
(71) Anmelder: THERMOPLAN AG, CH-6353 Weggis (CH)
(72) Erfinder: Fricker, Robert, 6403 Küssnacht (CH)
(74) Vertreter: Luchs, Willi

(57) **Zusammenfassung**

Ein Dispensergerät, welches als Kaffeemaschine (10) ausgebildet ist, hat einen Sockel (15), darauf mindestens eine Tasse (22, 24, 26, 28) oder dergleichen unterhalb eines Kaffeeauslasses (11), eines Heissdampf- (16), eines Heisswasser- (17), eines Milch- und/oder eines Milchschaum-Auslasses (19) stellbar ist. Die für die Kaffeemaschine (10) verwendbaren Tassen (22, 24, 26, 28) sind mit einer Codierung, vorzugsweise einer Strichcodierung (23, 23'), versehen und im Bereich, bei dem die Tasse (22, 24, 26, 28) unterhalb des jeweiligen Auslasses stellbar ist, ist wenigstens eine mit einer Auswerteeinheit (35) verbundene Leseeinheit (30) angeordnet, mittels der die Codierung der auf den Sockel (15) gestellten Tasse (22, 24, 26, 28) festgestellt und anschliessend der entsprechende Kaffee, und/oder die Milch bzw. der Milchschaum oder das Heisswasser in einer vorgegebenen Menge selbsttätig, ohne Tastendruck, in die Tasse (22, 24, 26, 28) eingefüllt wird. Dies ermöglicht eine vereinfachte Bedienung dieser als Dispensergerät ausgebildeten Kaffeemaschine.

## Beschreibung

Die Erfindung betrifft ein Dispensergerät mit einem oder mehreren Auslässen zum dosierten Entnehmen von flüssigen oder festen Mitteln, wobei unterhalb dem oder dieser Auslässe mindestens ein Behältnis stellbar ist; sowie dazugehörige Behältnisse.

Ein gattungsmässiges Dispensergerät, vorliegend eine Kaffeemaschine, die insbesondere im Gastronomiebereich verwendet wird, ist beispielsweise in der Druckschrift EP-A 0 761 150 ausführlich beschrieben. Diese Kaffeemaschine weist im wesentlichen ein Gehäuse, einen Sockel, diverse Auslässe sowie ein Bedienungspanel auf. Die zu gebrauchenden Tassen sind in der Regel auf einem neben der Kaffeemaschine plazierten Gestell gestapelt. Bei der Bedienung wird vom Bedienungspersonal oder in einem Selbstbedienungsrestaurant von einem Gast vorerst eine Kaffeetasse mit einer Grösse je nach dem gewünschten Kaffee vom Gestell genommen. Nachdem die Tasse unter den Kaffeeauslass gestellt worden ist, muss das Bedienungspersonal oder bei Selbstbedienung der Gast eine entsprechende Taste anwählen, um den gewünschten Kaffee, wie zum Beispiel einen normalen Kaffee-Crème, einen Cappuccino, einen Milchkaffee, einen Expresso-Kaffee oder ähnlichem, herauszulassen. Nachteilig hierbei ist, dass sich ein Bediener zuerst die entsprechende Tasse aussuchen und dann in einem weiteren Schritt bei der Kaffeemaschine nochmals zwischen verschiedenen Tasten auswählen muss, um den von ihm gewünschten Kaffee zu bekommen.

Der vorliegenden Erfindung wurde demgegenüber die Aufgabe zugrundegelegt, ein Dispensergerät nach der eingangs erwähnten Gattung derart zu verbessern, dass mit ihm eine vereinfachte Bedienbarkeit ermöglicht wird, ohne dass hierbei die Herstellungskosten des Gerätes gesteigert würden.

Die Aufgabe ist erfindungsgemäss durch die Merkmale im kennzeichnenden Teil des Anspruchs 1 gelöst.

Mit diesem erfindungsgemässen Dispensergerät wird eine vereinfachte Bedienung desselben erzielt, ohne dass es hierbei komplizierter und damit teurer in der Herstellung wird.

Ausführungsbeispiele der Erfindung sowie weitere Vorteile derselben sind nachfolgend anhand der Zeichnung näher erläutert. Es zeigt:
- Fig. 1: eine Vorderansicht einer erfindungsgemässen Kaffeemaschine,
- Fig.2: eine Seitenansicht der Kaffeemaschine nach Fig. 1 mit andeutungsweiser Darstellung ihrer Steuerung,
- Fig.3: eine Ansicht der Unterseite eines erfindungsgemässen als Tasse vorgesehenen Behältnisses,
- Fig.4: eine Ansicht von oben ins Innere einer Tasse mit einer Codierung im Tassenboden,
- Fig.5: eine Seitenansicht einer Tasse mit einer Codierung, und
- Fig.6: eine Seitenansicht eines Bechers mit einer Codierung.

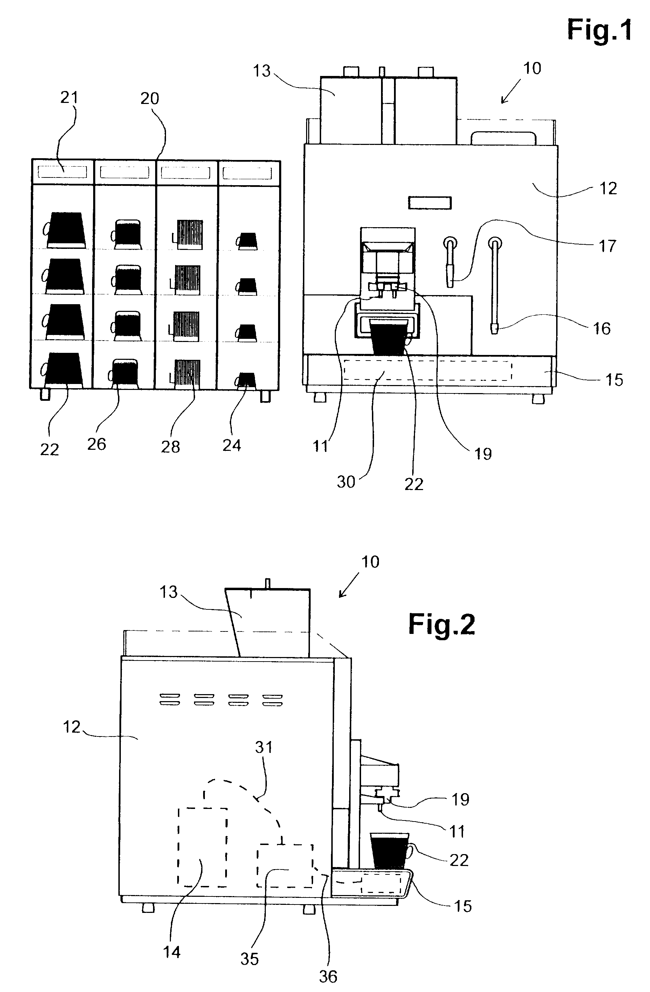

Fig. 1 und Fig.2 zeigen eine als Dispensergerät ausgebildete Kaffeemaschine 10, die insbesondere für den Einsatz im Gastronomiebereich geeignet ist. Der Aufbau einer solchen Kaffeemaschine ist beispielsweise in der eingangs erwähnten Druckschrift EP-A 0 761 150 umfassend erläutert und daher nachfolgend nicht mehr in jeder Einzelheit dargetan. Von dieser Kaffeemaschine 10 sind im wesentlichen ein Gehäuse 12, ein von oben zugänglicher Kaffeebohnen-Behälter 13, ein Auslasskopf mit diversen Auslässen sowie ein Sockel 15 veranschaulicht. Als Auslässe sind an der Frontseite des Gehäuses 12 ein Kaffee- 11, ein Milch- oder Milchschaum- 19, ein Heisswasser- 17 sowie ein Dampfauslass 16 nebeneinander angeordnet, aus denen die entsprechenden Mittel entnommen werden können. Auf diesen Sockel 15 kann eine Tasse 22 oder dergleichen unter einen der Auslässe oder unter die beiden nahe beieinander angeordneten Auslässe 11, 19 gestellt werden.

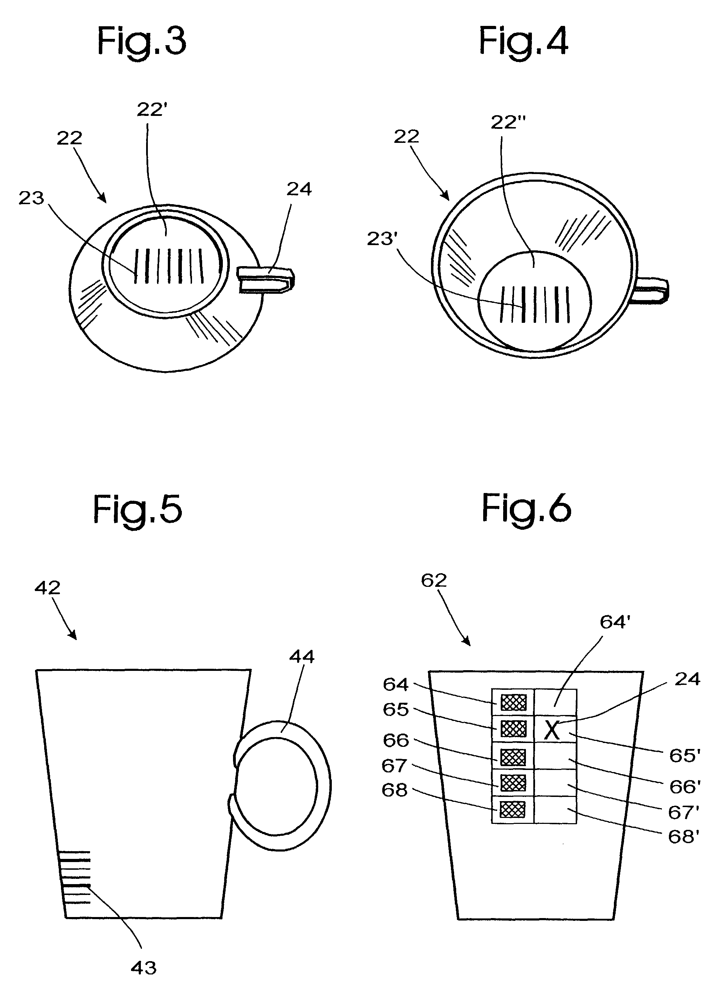

Erfindungsgemäss sind zum einen gemäss Fig.3 die für die Kaffeemaschine 10 verwendbaren Behältnisse, für welche vorliegend Tassen 22 vorgesehen sind, mit einer Codierung, insbesondere einer Strichcodierung 23, versehen und zum andern ist gemäss Fig.1 bzw. Fig.2 im Bereich, bei dem die Tasse 22 unterhalb die Auslässe 11, 16, 17, 19 stellbar ist, wenigstens eine mit einer Auswerteeinheit 35 verbundenen Leseeinheit 30 angeordnet, mittels der die Codierung der auf den Sockel 15 gestellten Tasse 22 festgestellt und anschliessend das entsprechende Getränk in einer vorgegebenen Menge selbsttätig - ohne Tastendruck - in die Tasse 22 eingefüllt wird.

Bei dieser Kaffeemaschine 10 sind die Auslässe 11, 19 nahe beieinander, indessen sind der Heisswasser- 17 und der Dampfauslass 16 im Abstand zueinander und auch im Abstand zu den Auslässen 11, 19 angeordnet, d.h. eine Tasse muss je nach dem, was eingefüllt werden soll, unter den entsprechenden Auslass gestellt werden. Alternativ hierzu könnten jedoch sämtliche Auslässe so nahe beieinander angeordnet sein, dass die Tasse nur an einer bestimmten zentrierten Stelle, bspw. unterhalb der Auslässe 11, 19 hingestellt werden müsste. Dies würde eine weitere Vereinfachung der Bedienbarkeit des Gerätes bedeuten.

Die Leseeinheit 30 ist in einer sehr vorteilhaften Ausführung im Sockel 15 der Kaffeemaschine 10 angeordnet und die Strichcodierung 23 auf der Unterseite 22' der Tasse 22 angebracht. Bei der Leseeinheit 30 handelt es sich um einen an sich handelsüblichen Strichcode-Leser, welcher in dem an sich als eine herausziehbare Schublade ausgebildeten Sockel 15 integriert sein kann. Mit Vorteil umgibt die Schublade die im Sockel 15 fest montierte Leseeinheit 30 derart, dass allfällige auf den beim Sockel vorstehenden Lesekopf der Leseeinheit fallende Flüssigkeit oder dergleichen in die für das Auffangen von wegspritzender Flüssigkeit vorgesehenen Schublade geleitet wird.

Gemäss Fig.2 ist die Leseeinheit 30 via eine elektrische Leitung 36 mit einer schematisch dargestellten Auswerteeinheit 35 verbunden. Falls die Leseeinheit 30 in der Schublade integriert ist, kann sie durch einen Stecker frontseitig der Schublade mit dem Leitungsteil 36 im Gehäuse 12 verbindbar sein, oder aber anstelle dieser Leitung 36 kann auch eine kabellose Signalübertragung, z.B. elektromagnetisch oder optisch, vorgesehen sein. Diese Leseeinheit 30 ist derart ausgebildet, dass sie als erstes erkennt, dass eine Tasse über ihr plaziert worden ist und als zweites stellt sie dann aufgrund der Strichcodierung fest, um welche Tasse es sich handelt und was für ein Getränk effektiv gewünscht wird. Die Auswerteeinheit 35 ihrerseits gibt über eine elektrische Leitung 31 entsprechende Signale an die Steuereinheit 14 der Kaffeemaschine 10 ab, welche dann die entsprechende Einheit, wie beispielsweise die nicht näher gezeigte Kaffeemühle für die Erzeugung von Kaffee aktiviert.

Neben der Kaffeemaschine 10 ist vorteilhaft ein Gestell 20 plaziert, auf welchem die Tassen nach den möglichen Verwendungsarten stapelweise sortiert sind. Im vorliegenden Ausführungsbeispiel sind vier vertikale Reihen vorgesehen, von denen die eine mit Tassen 22 für Kaffee-Crème oder Kaffee-Nature, die zweite mit Tassen 24 für Expresso-Kaffee, die dritte mit Tassen 26 für Cappuccino und die vierte mit Tassen 28 für Tee gebildet ist. Die Tassen einer jeweiligen Verwendungsart sind mit identischen Strichcodierungen und vorzugsweise mit gleichen Dimensionen versehen. Es versteht sich von selbst, dass indessen zwischen den verschiedenen Verwendungsarten unterschiedliche Strichcodierungen vorgesehen sind.

Die Funktionsweise dieser erfindungsgemässen Kaffeemaschine 10 erfolgt in der Weise, dass ein Bediener vorerst vom Gestell 20 anhand der Beschriftung 21 die gewünschte Tasse entnimmt, beispielsweise aus der Reihe mit den Tassen 22 für Kaffee-Creme. Sodann wird die Tasse unter den entsprechenden Auslass gestellt, vorliegend unter den Kaffeeauslass 11. Nach dem Hinstellen der Tasse erkennt dies die Leseeinheit 30, die dann die Strichcodierung liest und entsprechende Signale an die Auswerteeinheit 35 liefert, von welcher die Codierung dann identifiziert wird. Über die Steuereinheit 14 werden folglich die entsprechenden Vorrichtungen in der Kaffeemaschine angesteuert, so zum Beispiel die Kaffeemühle und anschliessend die Vorrichtung zur Erstellung des Kaffees.

Bei diesem oben erläuterten Ausführungsbeispiel, bei dem als Dispensergerät eine Kaffeemaschine dargestellt ist, handelt es sich bei den Mitteln um die typischen, wie sie dazu gebraucht werden. Als Mittel könnten im Rahmen der Erfindung jedoch auch Getränke, wie Fruchtsäfte, Mineralwasser, aber auch Sahne, Glacen oder feste Mittel, wie Popcorn oder ähnlichem vorgesehen sein.

Gemäss Fig.3 ist die Strichcodierung 23 auf der Unterseite 22' der Tasse 22 angebracht. Bei ihr kann es sich um eine herkömmliche Codierung handeln, die am Tassenboden aufgeklebt, eingebrannt, eingegossen oder anderweitig aufgebracht ist.

Bei der Tasse 22 gemäss Fig.4 ist die Codierung 23' auf der Innenseite im Tassenboden 22" enthalten. Die Leseeinheit wäre dann in entsprechender Weise oberhalb der Tasse beim Auslasskopf mit dem Auslass 11 bzw. 19 anzuordnen.

Fig.5 zeigt eine andere Variante einer Anordnung einer Codierung 43, welche an der äusseren Seitenwandung einer Tasse 42 angebracht ist. Die Codierlinien sind hierbei horizontal angeordnet. Sie könnten aber auch aufwärts oder schräg ausgerichtet sein. Die Leseeinheit wäre dann nicht im Sockel 15 der Kaffeemaschine, sondern vorteilhaft an der Frontseite des Gehäuses 12 angeordnet. Die Strichcodierung könnte im Prinzip auch rund um die Tasse herum geführt sein. Damit könnte die Leseeinheit die Codierung feststellen, ohne dass die Tasse zu diesem genau ausgerichtet werden müsste.

Fig.6 zeigt einen Becher 62, bei dem im Unterschied zu den Tassen gemäss Fig.3 bis Fig.5 die erfindungsgemässe Codierung durch ein von Hand oder durch ein maschinell angebrachtes Kreuz 63 oder dergleichen auf einem der rechts liegenden leeren Felder 64', 65', 66', 67', 68' erzeugt wird, zu welchen links beschriftete Felder 64, 65, 66, 67, 68 mit den gewünschten Getränken zugeordnet sind. Dieser Becher 62 kann beispielsweise vor dem Auffüllen des Getränkes an der Kasse mit dem entsprechenden Kreuz 63 in einem der Felder 64' bis 68' bezeichnet werden. Danach kann der Becher 62 vom Benutzer beim Dispensergerät unter den Auslass gestellt werden. Eine Leseeinheit stellt dann anhand des angebrachten Kreuzes 63 das gewünschte Getränk fest und bewirkt eine entsprechende Ansteuerung des Getränkeautomates, so dass das gewünschte Getränk in einer definierten Menge in den Becher 62 geleert wird.

Im Prinzip könnte der Becher 62 für die Codierung auch mit einem Magnetstreifen versehen sein, der bei der Kasse oder dergleichen mit der nötigen Information geladen wird, die dann beim Gerät durch die Leseeinheit gelesen wird. Auf dem Magnetstreifen könnte im Prinzip auch die Anzahl der bezahlten und herauszulassenden Füllmengen registriert und nach dem Herauslassen beim Gerät um eine Füllmenge abgezogen werden.

Anstelle von länglichen könnten auch ringförmige Strichcodierungen vorgesehen sein. Die Codierung liesse sich auch durch einen Magnetstreifen oder ein anderes elektronisches oder optisches Erkennungsmittel bewerkstelligen. So könnte die Codierung bspw. auch nur durch Feststellung des Durchmessers des definierten Tassenbodens erfolgen.

Im Prinzip könnte die Kaffeemaschine mit dieser erfindungsgemässen Anordnung insofern vereinfacht hergestellt werden, als für die verschiedenen Verwendungsarten keine Tasten mehr vorgesehen werden müssten. Selbstverständlich könnten solche auch vorgesehen sein, damit allenfalls Tassen nicht mit den durch die Codierung bewirkten Verwendungsart aufgefüllt werden können.

Mit dem Dispensergerät könnte auch nur ein Auslass vorgesehen sein, bei dem beispielsweise das gleiche Mittel, aber in unterschiedlich dosierten Mengen ausgelassen würde.

## Patentansprüche

1. Dispensergerät, mit einem oder mehreren Auslässen (11, 16, 17, 19) zum dosierten Entnehmen von flüssigen oder festen Mitteln, wobei unterhalb dem oder dieser Auslässe mindestens ein Behältnis (22, 42, 62) stellbar ist, dadurch gekennzeichnet, dass
die für das Dispensergerät verwendbaren Behältnisse (22, 42, 62) mit einer Codierung, vorzugsweise einer Strichcodierung (23, 23'), versehen sind, dass im Bereich, bei dem das Behältnis (22, 42, 62) unterhalb des jeweiligen Auslasses (11, 16, 17, 19) stellbar ist, wenigstens eine mit einer Auswerteeinheit (35) verbundene Leseeinheit (30) angeordnet ist, mittels der die Codierung am jeweiligen Behältnis (22, 42, 62) feststellbar und anschliessend das herauszulassende Mittel in einer vorgegebenen Menge selbsttätig, ohne Tastendruck, in das Behältnis (22, 42, 62) einfüllbar ist.

2. Dispensergerät nach Anspruch 1, dadurch gekennzeichnet, dass die Behältnisse (22, 42, 62) für ein bestimmtes Mittel mit identischen Strichcodierungen versehen sind, indessen zwischen den verschiedenen zu entnehmenden Mitteln unterschiedliche Strichcodierungen vorgesehen sind, wobei als Mittel zum Beispiel Getränke, wie Fruchtsäfte, Kaffee, Tee oder eine beliebige Getränkemischung, Milchschaum, Sahne, oder ein festes Mittel, wie Popcorn oder ähnlichem vorgesehen sein können.

3. Dispensergerät nach Anspruch 1 oder 2, dadurch gekennzeichnet, dass die Leseeinheit (30) derart ausgebildet ist, dass sie selbsttätig erkennt, wenn ein Behältnis (22, 42, 62) oberhalb oder neben ihr hingestellt wird, und dass sie die Strichcodierung liest.

4. Dispensergerät nach einem der vorhergehenden Ansprüche, dadurch gekennzeichnet, dass die Leseeinheit (30) über eine elektrische Leitung (36) mit einer Auswerteeinheit (35) und letztere mit einer Steuereinheit (14) des Gerätes verbunden ist.

5. Dispensergerät nach einem der vorhergehenden Ansprüche, dadurch gekennzeichnet, dass eine Anzeige oder ein Warnton vorgesehen ist, wenn von der Leseeinheit die Codierung am Behältnis nicht einwandfrei feststellbar ist.

6. Dispensergerät nach einem der vorhergehenden Ansprüche, dadurch gekennzeichnet, dass das Dispensergerät ohne Bedienungstasten für das Auslassen des entsprechenden Mittels gebaut ist.

7. Dispensergerät nach Anspruch 1, welches als Kaffeemaschine (10) ausgebildet ist, mit einem Sockel (15), darauf mindestens ein Behältnis, vorzugsweise eine Tasse (22, 24, 26, 28) oder dergleichen unterhalb eines Kaffee- (11), eines Heissdampf- (16), eines Heisswasser- (17), eines Milch- und/oder eines Milchschaum-Auslasses, (19) stellbar ist, dadurch gekennzeichnet, dass die Strichcodierung (23, 23') auf der Unterseite, seitlich oder auf der Innenseite des Behältnisses (22, 42, 62) angebracht und die Leseeinheit (30) im Sockel (15), an der Frontseite des Gehäuses (12) oder im Auslasskopf der Kaffeemaschine enthalten ist.

8. Dispensergerät nach Anspruch 1, dadurch gekennzeichnet, dass sämtliche vorgesehene Auslässe für ein Gerät zum dosierten Entnehmen von flüssigen oder festen Mitteln derart nahe beieinander angeordnet sind, dass das zu füllende Behältnis nur an einer einzigen definierten Stelle hinstellbar ist.

9. Behältnis für ein Dispensergerät nach einem der vorhergehenden Ansprüche, dadurch gekennzeichnet, dass das Behältnis mit wenigstens einer Codierung, vorzugsweise einer Strichcodierung (23, 23'), versehen ist.

10. Behältnis nach Anspruch 9, dadurch gekennzeichnet, dass die Codierung auf der Unterseite (22') der Tasse (22, 24, 26, 28), seitlich oder innen, vorzugsweise im Tassenboden angebracht ist.

11. Behältnis nach Anspruch 9 oder 10, dadurch gekennzeichnet, dass die Codierung durch eine manuell oder maschinell auf das Behältnis angebrachte Kennzeichnung, beispielsweise ein Kreuz (63), erfolgt.

12. Dispensergerät nach Anspruch 11, dadurch gekennzeichnet, dass die Kennzeichnung, bspw. das Kreuz 63 oder dergleichen, auf einem von leeren Feldern (64', 65', 66', 67', 68') erzeugt wird, zu welchen beschriftete Felder (64, 65, 66, 67, 68) mit den gewünschten Mitteln zugeordnet sind.
